# EUROPÄISCHE PATENTSCHRIFT

(11) **EP 1 108 626 B1**
(45) Veröffentlichungstag und Bekanntmachung des Hinweises auf die Patenterteilung: **02.10.2002**
(21) Anmeldenummer: 01107463.0
(22) Anmeldetag: 11.07.1996
(51) Int. Cl.: B60R 21/20

(54) **Gassack-Rückhaltemodul**
Airbag restraint module
Module de retenue pour coussin gonflable

(30) Priorität: 04.08.1995 DE 19528754
(43) Veröffentlichungstag der Anmeldung: 20.06.2001
(62) Teilanmeldung aus: 96111202.6
(73) Patentinhaber: TRW Occupant Restraint Systems GmbH & Co. KG, 73553 Alfdorf (DE)
(72) Erfinder: Lutz, Joachim, 73579 Schechingen (DE)
(74) Vertreter: Sties, Jochen, Dipl.-Ing.

(56) Entgegenhaltungen:
- EP-A- 0 650 871
- WO-A-93/08042
- US-A- 5 096 222
- US-A- 5 405 164
- US-A- 5 433 472

## Beschreibung

Die Erfindung bezieht sich auf einen Gassack-Rückhaltemodul nach dem Oberbegriff des Anspruchs 1.

Solche Gassack-Rückhaltemodule sind dem Fachmann auf dem Gebiet der Fahrzeuginsassen-Sicherheitstechnik beispielsweise aus der EP-A-0 650 871 bekannt. Üblicherweise wird als Aufblasvorrichtung ein sogenannter Gasgenerator mit einer pyrotechnischen Ladung verwendet, die nach Aktivierung in sehr kurzer Zeit ein vorbestimmtes Gasvolumen freisetzt. In jüngster Zeit werden jedoch vermehrt Anstrengungen unternommen, Gassack-Rückhaltemodule zu schaffen, die mit einer deutlich kleineren pyrotechnischen Ladung arbeiten, da deren Verwendung insbesondere hinsichtlich der Umweltverträglichkeit nicht problemlos ist. Durch die Erfindung wird ein Gassack-Rückhaltemodul der eingangs genannten Art bereitgestellt, der an die Verwendung einer Aufblasvorrichtung angepaßt ist, die einen Druckgasbehälter aufweist, insbesondere vom Typ "Heated Gas Inflator". Bei einer solchen Aufblasvorrichtung wird für das Entfalten des Gassacks ein vorbestimmtes Volumen von Gas freigesetzt, das in der Druckgasflasche unter einem hohen Druck eingeschlossen war. Bei der Aktivierung wird der Aufblasvorrichtung zusätzlich eine chemische Reaktion des in dem Druckgasbehälter enthaltenen Gases eingeleitet, wodurch es zu einer Zunahme der Temperatur des freigesetzten Gases und somit zu einer Zunahme dessen Volumens kommt.

Aufgabe der Erfindung ist es, ein Gassack-Rückhaltemodul der eingangs genannten Art zu schaffen, das eine besonders einfache und sichere Montage erlaubt.

Diese Aufgabe wird durch ein Gassack-Rückhaltemodul mit den Merkmalen des Anspruchs 1 gelöst.

Weitere Vorteile und Merkmale der Erfindung ergeben sich aus den Unteransprüchen sowie aus der folgenden Beschreibung und aus den beigefügten Zeichnungen. In diesen zeigt:
- Figur 1: einen schematischen Querschnitt durch das Gehäuse des erfindungsgemäßen Gassack-Rückhaltemoduls mit montiertem Druckgasbehälter;
- Figur 2: eine Draufsicht auf das Gehäuse von Figur 1;
- Figur 3: einen Querschnitt entlang der Linie III-III von Figur 2;
- Figur 4: einen schematischen Querschnitt durch den Befestigungsrahmen des erfindungsgemäßen Gassack-Rückhaltemoduls mit zusammengefaltetem Gassack;
- Figur 5: eine schematische Draufsicht auf den Befestigungsrahmen von Figur 4 mit entferntem Gassack;
- Figur 6: einen Querschnitt entlang der Linie VI-VI von Figur 5;
- Figur 7: eine perspektivische Ansicht eines zusammengefalteten Gassacks;
- Figur 8: eine perspektivische Ansicht eines zusammengefalteten Gassacks in einer zur Ausführungsform von Figur 7 alternativen Ausführungsform; und
- Figur 9: einen Querschnitt durch einen montierten Gassack-Rückhaltemodul gemäß der Erfindung.

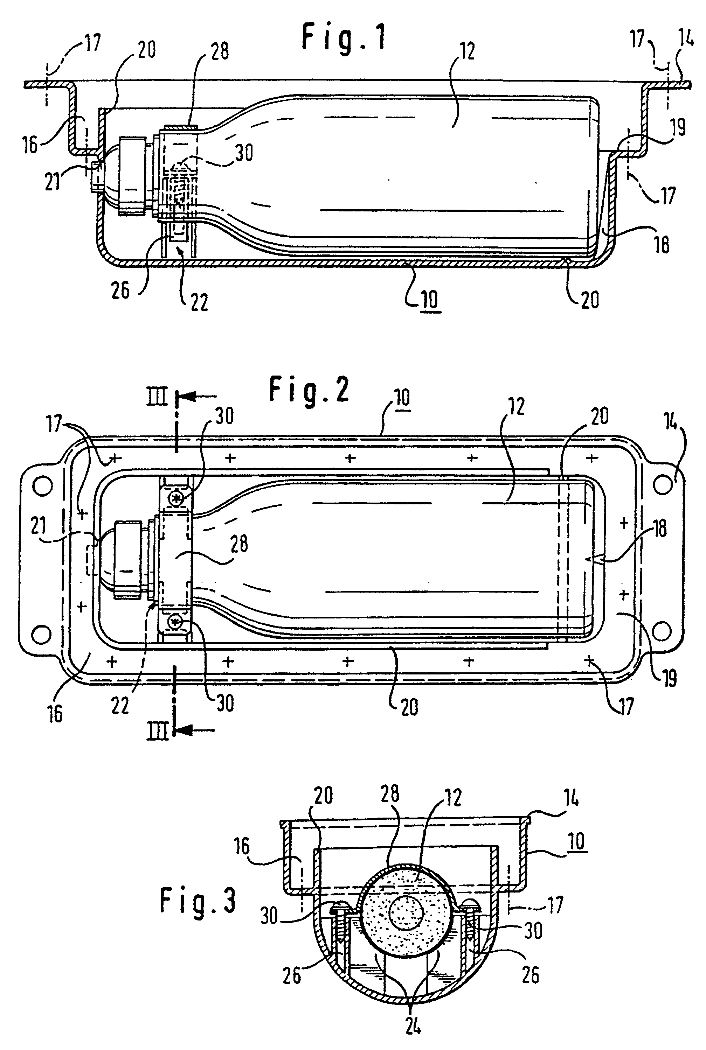

In den Figuren 1 bis 3 ist ein Gehäuse eines erfindungsgemäßen Gassack-Rückhaltemoduls dargestellt. Das Gehäuse 10 weist einen wannenförmigen Boden auf, der an die Form einer Druckgasflasche 12 angepaßt ist, die in dem Gehäuse aufgenommen werden soll, sowie einen kastenförmigen Oberteil, der an der geöffneten Seite des wannenförmigen Bodens angeordnet ist. Die Druckgasflasche 12 enthält unter Druck stehendes Gas, das nach Aktivierung des Gassack-Rückhaltemoduls aus dieser im Bereich des Kopfes ausströmt. Ferner wird bei der Aktivierung eine chemische Reaktion des Druckgases eingeleitet, die zu einer Zunahme der Temperatur des freigesetzten Gases und somit zu einer Zunahme dessen Volumens führt.

Der kastenförmige Oberteil weist an seiner zu dem wannenförmigen Boden entgegengesetzten Seite einen umlaufenden Rand 14 auf, der an den Stirnseiten des Gehäuses 10 erweitert ist und mit Öffnungen für die Befestigung des Gehäuses an einer zugeordneten Aufnahme im Fahrzeug versehen ist. Ferner ist in dem kastenförmigen Oberteil ein Kanal 16 ausgebildet, der entlang einer Stirnseite und den beiden Längsseiten des Gehäuses 10 verläuft. An der verbleibenden Stirnseite ist anstelle des Kanals 16 ein Absatz 19 am Übergang zwischen dem kastenförmigen Oberteil und dem wannenförmigen Boden ausgebildet. In dem Kanal 16 bzw. entlang dem Absatz 19 sind mehrere Löcher 17 ausgebildet, die in den Figuren 1 bis 3 nur schematisch angedeutet sind.

Der wannenförmige Boden enthält für eine sichere Befestigung der Druckgasflasche 12 in dem Gehäuse 10 eine Rippe 18, einen Steg 20 und eine Öffnung 21. Die Rippe 18 ist an der Stirnseite des Gehäuses 10 ausgebildet, an welcher auch der Absatz 19 ausgebildet ist. Sie weist an der tiefsten Stelle des wannenförmigen Bodens des Gehäuses 10 die größte Höhe auf und läuft im Bereich des Absatzes 19 aus. Der Steg 20 verläuft mit konstanter Erhebung von einer Längsseite des Gehäuses 10 über den wannenförmigen Boden zu der anderen Längsseite des Gehäuses. Die Öffnung 21 ist an der Stirnseite des Gehäuses 10 ausgebildet, die der Rippe 18 gegenüberliegt. Ferner ist eine Aufnahme 22 vorgesehen, die auf der zu der Rippe 18 entgegengesetzten Seite des Gehäuses ausgebildet ist und aus einem Auflager 24 und zwei beiderseits des Auflagers 24 ausgebildeten Gegenhaltestiften 26 besteht, die jeweils mit einer in deren Längsrichtung verlaufenden Bohrung versehen sind.

Das Gehäuse 10 ist mittels eines Gußverfahrens hergestellt. Auf diese Weise können alle beschriebenen Merkmale des Gehäuses 10 in einfacher Weise direkt bei dessen Herstellung ausgebildet werden. Dies ergibt im Vergleich mit den bekannten Gehäusen von Gassack-Rückhaltemodulen, die im allgemeinen aus Strangguß-Profilen bestehen oder aus verschiedenen Einzelelementen zusammengesetzt sind, erhebliche Vorteile bei der Herstellung.

Die Befestigung der Druckgasflasche 12 in dem Gehäuse 10 geschieht in der folgenden Weise. Die Druckgasflasche 12 wird so in das Gehäuse 10 eingebracht, daß zuerst ein zylindrischer Ansatz am Kopf der Druckgasflasche 12 in die Öffnung 21 eingreift. Dann wird der Boden der Druckgasflasche in den wannenförmigen Boden des Gehäuses 10 eingelegt, wobei aufgrund der Rippe 18 ein automatische Ausrichtung der Druckgasflasche in axialer Richtung erfolgt. Gleichzeitig führt der Steg 20 das bodenseitige Ende der Druckgasflasche 10 in seine korrekte Position. Aufgrund der Fixierung des kopfseitigen Endes der Druckgasflasche in der Öffnung 21 kommt dabei deren Hals automatisch in der Aufnahme 22 zu liegen. Nun wird über den Hals der Druckgasflasche 12 ein Bügel 28 gelegt, der an den Gegenhaltestiften 26 mittels selbstschneidender Schrauben 30 befestigt wird, die in die Bohrungen in den Gegenhaltestiften 26 eingeschraubt werden. Damit ist die Montage der Druckgasflasche 12 in dem Gehäuse 10 abgeschlossen, und es steht eine vormontierte Baugruppe zur Verfügung, die unkompliziert zu handhaben ist.

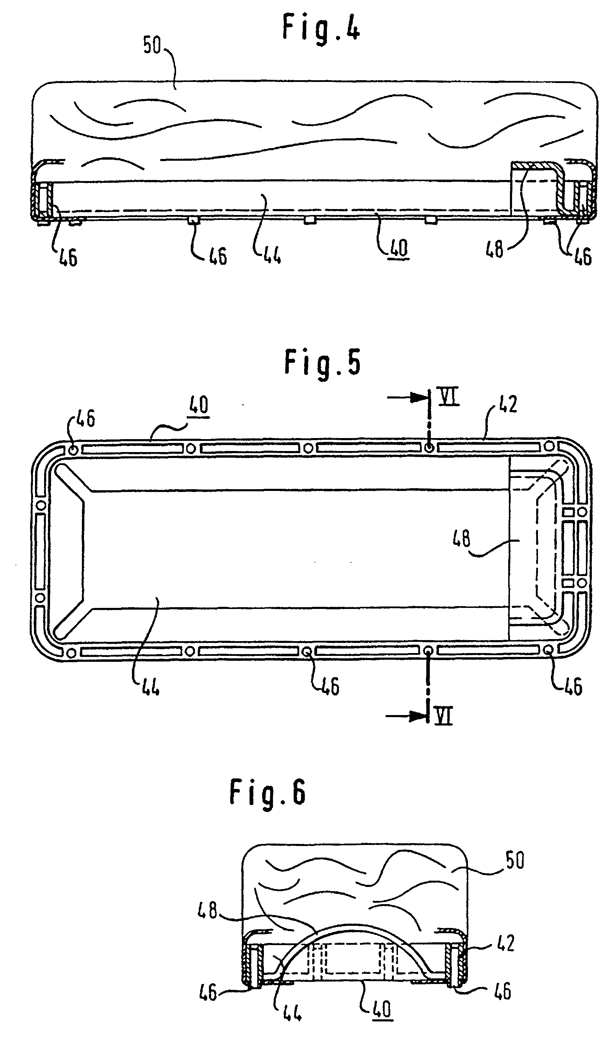

In den Figuren 4 bis 6 ist ein Befestigungsrahmen eines erfindungsgemäßen Gassack-Rückhaltemoduls dargestellt. Der Befestigungsrahmen 40 weist einen Rand 42 auf, der eine Innenöffnung 44 umgibt. In dem Rand 42 sind mehrere Befestigungshülsen 46 ausgebildet, die geringfügig über eine Seite des Befestigungsrahmens 40 hervorstehen und mit jeweils einer sich in der Längsrichtung der Befestigungshülsen 46 erstreckenden Bohrung versehen sind; die Anordnung der Befestigungshülsen 46 entspricht der Anordnung der Löcher 17 an dem Gehäuse 10. An einer Stirnseite ist der Befestigungsrahmen 40 mit einem Halteabschnitt 48 versehen, der dafür vorgesehen ist, zusammen mit der Rippe 18, dem Steg 20 und der Öffnung 21 die Druckgasflasche 12 in einer definierten Position festzulegen. Der Halteabschnitt 48 steht von dem Rand 42 zum Innenraum des Befestigungsrahmens 40 hin hervor und hat in der Querschnittsansicht von Figur 6 die Gestalt eines Kreisabschnittes.

Auch der Befestigungsrahmen 40 ist mittels eines Gußverfahrens hergestellt. Auf diese Weise können alle beschriebenen Merkmale des Befestigungsrahmens 40 in einfacher Weise direkt bei dessen Herstellung ausgebildet werden. Als Material für den Befestigungsrahmen 40 und für das Gehäuse 10 eignen sich insbesondere faserverstärkte thermoplastische Werkstoffe sowie gießbare Aluminium- und Magnesiumlegierungen.

Der so ausgestaltete Befestigungsrahmen 40 wird mit einem Gassack 50 zu einer vormontierten Baugruppe verbunden. Dazu wird der Befestigungsrahmen 40 durch die Einblasöffnung des Gassacks in diesen eingelegt und so an einem die Einblasöffnung umgebenden Befestigungsabschnitt des Gassacks angeordnet, daß die hervorstehenden Abschnitte der Befestigungshülsen 46 durch Öffnungen hindurchtreten, die in dem Befestigungsabschnitt ausgebildet sind. Auf diese Weise ist der Gassack 50 an dem Befestigungsrahmen 40 fixiert. Anschließend kann der Gassack über dem Befestigungsrahmen 40 zusammengefaltet werden, so daß er eine kompakte Gestalt aufweist und seitlich im wesentlichen nicht über den Außenrand des Befestigungsrahmens 40 hinaussteht. Schließlich wird der Gassack 50 in diesem Zustand fixiert, so daß er sich bei der weiteren Handhabung der aus ihm und dem Befestigungsrahmen 40 gebildeten Baugruppe nicht wieder entfalten kann.

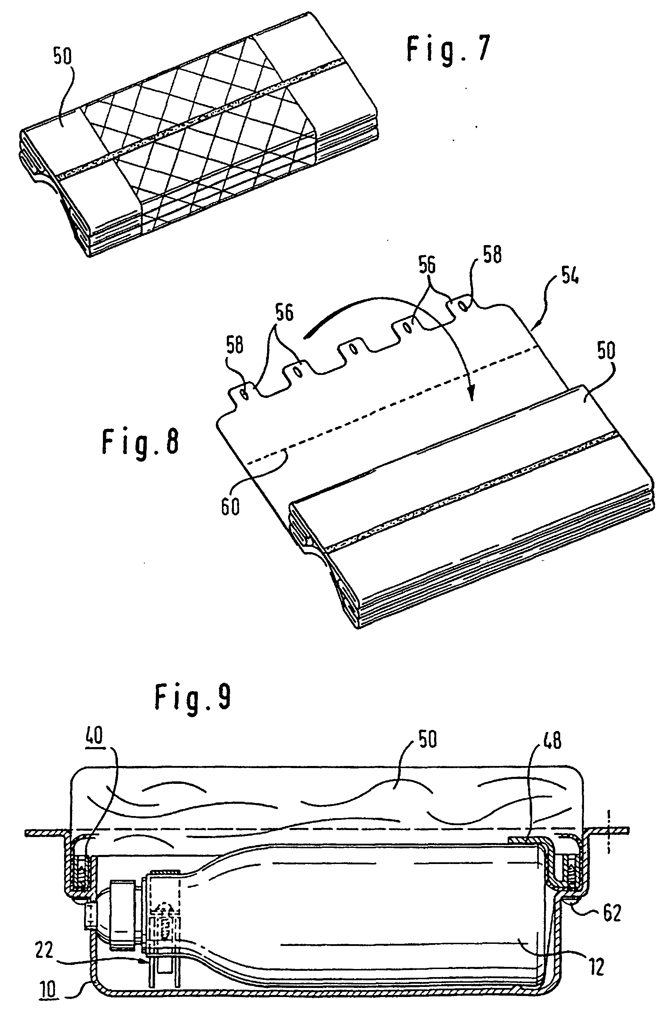

Dieses Fixieren kann in bekannter Weise mit einer Kunststoffolie geschehen, die nach Art einer Banderole um den gefalteten Gassack geführt ist, wie dies schematisch in Figur 7 dargestellt ist, oder mit einem Fixierungsteil 54 (siehe Figur 8), dessen eine Längsseite fest mit dem Gassack 50 verbunden ist. Die andere Längsseite des Fixierungsteils 54 ist mit Laschen 56 versehen, in denen Öffnungen 58 ausgebildet sind. Der zwischen den beiden Längsseiten liegende Mittelabschnitt des Fixierungsteils 54 ist mit einer Perforation 60 versehen. Wenn der Gassack 50 in die gewünschte, kompakte Gestalt zusammengefaltet ist, die in Figur 8 dargestellt ist, wird das Fixierungsteil über den Gassack geschlagen, und die Öffnungen 58 der Laschen 56 werden in die hervorstehenden Abschnitte der Befestigungshülsen 46 eingehängt, so daß der Gassack fixiert ist. Durch die Perforation 60 ist eine Aufreißlinie vorgegeben, entlang der das Fixierungsteil 54 bei einer Aktivierung des Gassack-Rückhaltemoduls aufreißt und den Gassack freigibt. Wenn der Gassack 50 auf diese Weise fixiert ist, kann die aus dem Gassack und dem Befestigungsrahmen 40 bestehende Baugruppe problemlos gehandhabt werden, insbesondere für die Montage an dem vormontierten Gehäuse 10.

Die Montage des mit der Druckgasflasche 12 versehenen Gehäuses 10 an dem mit dem Gassack 50 versehenen Befestigungsrahmen 40 ist aufgrund der vorteilhaften Ausgestaltung der beiden Teile des Gehäuses besonders einfach. Der Befestigungsrahmen 40 wird auf das Gehäuse 10 auf- und in den Kanal 16 eingesetzt, wobei die korrekte Positionierung der beiden Teile relativ zueinander durch den Kanal 16 bzw. den Absatz 19 gewährleistet ist: Aufgrund der Ausbildung des Halteabschnittes 48 an dem Befestigungsrahmen ist die Zuordnung der beiden Teile zueinander eindeutig, so daß eine fehlerhafte Montage ausgeschlossen ist. Nach dem Aufsetzen des Befestigungsrahmens 40 auf das Gehäuse 10 werden durch die Löcher 17 selbstschneidende Schrauben 62 in die Bohrungen 46 der Befestigungshülsen 42 eingeschraubt. Diese Schrauben 62 sind vorzugsweise die gleichen Schrauben wie die Schrauben 30, die zum Befestigen des Bügels 28 an den Gegenhaltestiften 26 verwendet werden, so daß die zur Montage des erfindungsgemäßen Gassack-Rückhaltemoduls notwendigen Bauelemente auf ein Minimum reduziert werden. Nach dem Verschrauben des Befestigungsrahmens 40 mit dem Gehäuse 10 ist die Druckgasflasche 12 sicher gegen unerwünschte Bewegungen in allen Richtungen festgelegt, da der Halteabschnitt 48 auf den Wandungsabschnitt der Druckgasflasche 12 drückt, der dem Wandungsabschnitt diametral gegenüberliegt, an dem der Steg 20 angreift. Somit ist die Druckgasflasche 12 in radialer Richtung durch die Öffnung 21, die Aufnahme 22 und den Steg 20 zusammen mit dem Halteabschnitt 48 und in axialer Richtung durch die Öffnung 21 zusammen mit der Rippe 18 und zusätzlich durch die Aufnahme 22 gehalten.

Aus dieser Gestaltung des Gehäuses des Gassack-Rückhaltemoduls ergeben sich eine Reihe von Vorteilen. Da der Befestigungsrahmen und das Gehäuse gegossen sind, können die zur Festlegung der Druckgasflasche 12 verwendeten Elemente in besonders einfacher Weise als integrale Bestandteile des Gehäuses und des Befestigungsrahmens ausgebildet werden. Durch den Kanal 16 ist der Befestigungsabschnitt des Gassacks 50 in dem Bereich geschützt untergebracht, in welchem das unter Umständen heiße Druckgas aus der Druckgasflasche ausströmt, so daß keine Beschädigung der Wandung des Gassacks in diesem Bereich auftreten kann. Aufgrund der Aufteilung des Gassack-Rückhaltemoduls in zwei getrennt voneinander vormontierbare Baugruppen ergibt sich eine besonders große Flexibilität bei der Herstellung. Schließlich ist trotz der einfachen Montage die Druckgasflasche 12 in zuverlässiger Weise in dem Gehäuse festgelegt.

## Patentansprüche

1. Gassack-Rückhaltemodul mit einem Gehäuse (10), einer in diesem angeordneten Aufblasvorrichtung mit einem flaschenartigen Druckgasbehälter (12), die nach Aktivierung ein Volumen von Druckgas bereitstellt, sowie einem gefalteten Gassack (50), der einen an dem Gehäuse (10) festgelegten, eine Einblasöffnung umgebenden Befestigungsabschnitt aufweist, wobei das Gehäuse (10) mit einem wannenförmigen Boden zur Aufnahme des Druckgasbehälters (12) und einem kastenförmigen Oberteil ausgebildet ist und der Befestigungsabschnitt des Gassacks (50) mit einem Befestigungsrahmen (40) versehen ist, der in den Oberteil des Gehäuses (10) eingesetzt ist, **dadurch gekennzeichnet, daß** der Befestigungsrahmen (40) einen an die Flaschenform des Druckgasbehälters (50) angepaßten und dessen Boden auf der dem Gehäuse (10) gegenüberliegenden Seite umgreifenden Halteabschnitt (48) aufweist.

2. Gassack-Rückhaltemodul nach Anspruch 1, **dadurch gekennzeichnet, daß** in der Stirnseite des Gehäuses (10), die zu der dem Boden des Druckgasbehälters (12) gegenüberliegenden Stirnseite entgegengesetzt ist, eine Öffnung (21) ausgebildet ist, in die ein Ansatz des Druckgasbehälters (12) eingreift.

3. Gassack-Rückhaltemodul nach einem der vorhergehenden Ansprüche, **dadurch gekennzeichnet, daß** das Gehäuse (10) mit dem Druckgasbehälter (12) einerseits und der Befestigungsrahmen (40) mit dem gefalteten Gassack (50) andererseits zwei vormontierte Baugruppen bilden.

4. Gassack-Rückhaltemodul nach einem der vorhergehenden Ansprüche, **dadurch gekennzeichnet, daß** in dem Gehäuse (10) eine Aufnahme (22) für den Hals des Druckgasbehälters (12) ausgebildet ist, die ein Auflager (24) und einen Bügel (28) enthält, der mit an dem Gehäuse (10) ausgebildeten Gegenhaltestiften (26) durch selbstschneidende Schrauben (30) verbunden ist.

5. Gassack-Rückhaltesystem nach einem der vorhergehenden Ansprüche, **dadurch gekennzeichnet, daß** der Befestigungsrahmen (40) Befestigungshülsen (46) aufweist, welche in dem Befestigungsabschnitt ausgebildete Öffnungen durchqueren und in welche selbstschneidende Schrauben (62) eingreifen, die den Befestigungsrahmen (40) an dem Gehäuse (10) festlegen.

6. Gassack-Rückhaltesystem nach einem der vorhergehenden Ansprüche, **dadurch gekennzeichnet, daß** der Gassack (50) ein im wesentlichen rechteckiges Fixierungsteil (54) aufweist, dessen eine Längsseite fest mit dem Gassack (50) im Bereich des Befestigungsabschnittes verbunden ist, dessen andere Längsseite an dem Befestigungsrahmen (40) mittels Laschen (56) festgelegt ist, die Öffnungen (58) aufweisen, in welche die Befestigungshülsen (46) eingreifen, und dessen zwischen den Längsseiten liegender und über den zusammengefalteten Gassack (50) geführter Mittelabschnitt eine Perforation (60) aufweist, die von dem Gassack (50) bei seinem Entfalten aufgerissen wird.

7. Gassack-Rückhaltemodul nach einem der vorhergehenden Ansprüche, **dadurch gekennzeichnet, daß** an dem Gehäuse (10) eine mit dem Boden des Druckgasbehälters (12) in Berührung stehende Rippe (18) und ein mit einem dem Boden benachbarten Wandungsabschnitt des Druckgasbehälters (12) in Berührung stehender Steg (20) ausgebildet sind.

8. Gassack-Rückhaltemodul nach einem der vorhergehenden Ansprüche, **dadurch gekennzeichnet, daß** das Gehäuse (10) und der Befestigungsrahmen (40) aus einem Gußmaterial bestehen.

## Claims

1. A gas bag restraint module comprising a housing (10), an inflation device disposed in the housing and having a bottle-type pressurized gas container (12), said inflation device providing a volume of pressurized gas after actuation, and further comprising a folded gas bag (50), which has an attachment section fixed in place at the housing (10) and surrounding an inflation aperture, the housing (10) being designed with a trough-shaped base to accommodate the pressurized gas container (12), and a box-shaped upper section, and the attachment section of the gas bag (50) being provided with an attachment frame (40) inserted in the upper section of the housing (10), **characterized in that** the attachment frame (40) has a retaining section (48) which is adapted to the bottle shape of the pressurized gas container (50) and which encompasses the base of said pressurized gas container on the side opposite the housing (10).

2. The gas bag restraint module according to claim 1, **characterized in that** in the front end of the housing (10), which is opposite to the front end facing the base of the pressurized gas container (12), an opening (21) is provided into which a projection on the pressurized gas container (12) engages.

3. The gas bag restraint module according to either of the preceding claims, **characterized in that** the housing (10) together with the pressurized gas container (12), on the one hand, and the attachment frame (40) together with the folded gas bag (50), on the other, form two pre-assembled units.

4. The gas bag restraint module according to any of the preceding claims, **characterized in that** an accommodation (22) for the neck of the pressurized gas container (12) is provided in the housing (10) and contains a support (24) and a strap (28) which is connected by self-tapping screws (30) to support studs (26) formed on the housing (10).

5. The gas bag restraint system according to any of the preceding claims, **characterized in that** the attachment frame (40) has attachment sleeves (46) which traverse openings formed in the attachment section and into which self-tapping screws (62) engage, which locate the attachment frame (40) on the housing (10).

6. The gas bag restraint system according to any of the preceding claims, **characterized in that** the gas bag (50) has a substantially rectangular fixing part (54), one long side of which is firmly connected to the gas bag (50) in the region of the attachment section, the other long side of which is located on the attachment frame (40) by means of tongues (56), which have openings (58), into which the attachment sleeves (46) engage, and the middle section of which, situated between the long sides and passed over the folded gas bag (50), has a perforation (60) which is torn open by the gas bag (50) when it unfolds.

7. The gas bag restraint module according to any of the preceding claims, **characterized in that** a rib (18) which is in contact with the base of the pressurized gas container (12) and a web (20) which is in contact with a section of the wall of the pressurized gas container (12) adjacent to the base, are formed on the housing (10).

8. The gas bag restraint module according to any of the preceding claims, **characterized in that** the housing (10) and the attachment frame (40) consist of cast material.

## Revendications

1. Module de retenue de coussin à gaz, comprenant un boîtier (10) et, agencé dans celui-ci, un dispositif de gonflage avec un récipient de gaz comprimé en forme de bouteille (12) qui, après activation, fournit un volume de gaz comprimé, ainsi qu'un coussin à gaz plié (50) qui comporte une portion de fixation immobilisée sur le boîtier (10) et entourant un orifice de gonflage, le boîtier (10) étant réalisé avec un fond en forme de bac destiné à recevoir le récipient de gaz comprimé (12) et avec une partie supérieure en forme de caisson, et la portion de fixation du coussin à gaz (50) étant pourvue d'un cadre de fixation (40) qui est logé dans la partie supérieure du boîtier (10), **caractérisé en ce que** le cadre de fixation (40) présente une portion de retenue (48) adaptée à la forme de bouteille du récipient de gaz comprimé (50) et qui entoure le fond de celui-ci sur le côté situé à l'opposé du boîtier (10).

2. Module de retenue de coussin à gaz selon la revendication 2, **caractérisé en ce que**, dans la face frontale du boîtier (10) située à l'opposé de la face frontale située en vis-à-vis du fond du récipient de gaz comprimé (12), est réalisé un orifice (21) dans lequel s'engage un embout du récipient de gaz comprimé (12).

3. Module de retenue de coussin à gaz selon l'une des revendications précédentes, **caractérisé en ce que**, d'une part, le boîtier (10) avec le récipient de gaz comprimé (12) et, d'autre part, le cadre de fixation avec le coussin à gaz plié (50) forment deux ensembles préassemblés.

4. Module de retenue de coussin à gaz selon l'une des revendications précédentes, **caractérisé en ce que** dans le boîtier (10) est réalisé un moyen de réception (22) pour le goulot du récipient de gaz comprimé (12) qui contient un chevalet (24) et un étrier (28) relié par des vis autotaraudeuses (30) à des chevilles antagonistes (26) réalisées sur le boîtier (10).

5. Module de retenue de coussin à gaz selon l'une des revendications précédentes, **caractérisé en ce que** le cadre de fixation (40) présente des douilles de fixation (46) qui traversent des ouvertures ménagés dans la portion de fixation et dans lesquelles s'engagent des vis autotaraudeuses (62) qui immobilisent le cadre de fixation (40) sur le boîtier (10).

6. Module de retenue de coussin à gaz selon l'une des revendications précédentes, **caractérisé en ce que** le coussin à gaz (50) présente une partie de fixation (54) sensiblement rectangulaire dont l'un des grands côtés est relié au coussin à gaz (50) dans la zone de la portion de fixation, dont l'autre grand côté est immobilisé contre le cadre de fixation (40) au moyen de pattes (56) qui présentent des ouvertures (58) dans lesquelles s'engagent les douilles de fixation (46) et dont la portion centrale qui est située entre les grands côtés et qui passe par-dessus le coussin à gaz (50) plié présente une perforation (60) qui est déchirée par le coussin à gaz (50) lors de son déploiement.

7. Module de retenue de coussin à gaz selon l'une des revendications précédentes, **caractérisé en ce que** sur le boîtier (10) sont réalisées une nervure (18) en contact avec le fond du récipient de gaz comprimé (12) et une barrette (20) en contact avec une portion de paroi du récipient de gaz comprimé (12) voisine du fond.

8. Module de retenue de coussin à gaz selon l'une des revendications précédentes, **caractérisé en ce que** le boîtier (10) et le cadre de fixation (40) sont réalisés en matériau moulé.
